# EUROPEAN PATENT APPLICATION

(11) **EP 4 624 041 A1**
(43) Date of publication of application: **01.10.2025**
(21) Application number: 24167528.9
(22) Date of filing: 28.03.2024
(51) Int. Cl.: B01J 19/00, B01F 25/313, B01J 19/24

(54) **MODULAR AGITATION MEANS FOR AGITATING A GASEOUS STREAM OF HYDROCARBONS**

(71) Applicant: Basell Polyolefine GmbH, 50389 Wesseling (DE)
(72) Inventor: LING, Antonio, 65926 Frankfurt/M. (DE); ZIMMERMANN, Tom, 65926 Frankfurt/M. (DE); FRANZEN, Pascal, 65926 Frankfurt/M. (DE)
(74) Representative: LyondellBasell

(57) **Abstract**

The present disclosure refers to a modular agitation means for agitating a gaseous stream of hydrocarbons, in particular in cracking processes, the agitation means comprising a tubular component and at least one insert. The present disclosure further refers to an insert for cracking coils and tubes, respectively, and processes carried out therein.

## Description

### TECHNICAL FIELD

The present disclosure refers to a modular agitation means for agitating a gaseous stream of hydrocarbons, in particular in cracking processes, the agitation means comprising a tubular component and at least one insert. The present disclosure further refers to an insert for cracking coils and tubes, respectively, and processes carried out therein.

### BACKGROUND

Thermal cracking process are used to breakdown complex organic molecules into smaller, more useful alkanes and alkenes which form the basis for the production of polymers. In hydrocarbon cracking, a stream of hydrocarbons is passed through a cracking tube or coil and thermally cracked at high temperatures and pressures within the coils. The energy required to crack the carbon-carbon bonds is usually supplied by indirect heating of the hydrocarbon stream. Due to the extreme conditions under which cracking takes place, some of the hydrocarbons get severely dehydrogenated and deposit as coke on the inside of the coils. Because coke is a poor heat conductor, wall temperature and in turn coke formation increases and heat transfer efficiency decreases. Since yields are favored by high temperature and low residence time in the coil, the aim is to increase the efficiency of the heat transfer from the coils to the hydrocarbon stream.

Due to the cylindrical geometry of the coils, a nearly laminar flow profile in the hydrocarbon stream is established, with the highest flow velocity in the center and the lowest velocity in the edge area or at the contact surfaces between hydrocarbon stream and coil. The different flow velocities lead to a temperature gradient throughout the cross-section of the hydrocarbon stream, making it more difficult to achieve full cracking and avoid coking. In order to improve the heat transfer, it would be desirable to realize homogeneity or uniform temperature distribution of the hydrocarbon stream.

US 8,033,767 discloses a centrifugally cast tube for cracking processes. The tube includes a plurality of grooves and bosses that are mechanically machined into the interior surface of the tube, creating a profile that is defined by a plurality of intersecting concave and convex radii. The tube is said to have an enhanced heat transfer rate and being resistant to creep, carburization and metal dusting.

WO 2010/032024 relates to piping for use as a pyrolysis tube in a cracking furnace. The tube is formed such that is has at least one section whose centerline curves in three dimensions, to induce swirl flow in the tube to try and create a homogenous temperature profile over the cross-section of the hydrocarbon stream passing through said tube.

US 5,950,718 describes a thermal cracking tube adapted to be directly heated in a thermal cracking furnace and for producing ethylene, or ethylene and propylene, the tube comprising a tube wall made of a heat-resistant alloy and having an inner surface which defines a passage for flow of a hydrocarbon material in a single-phase, gaseous form therethrough at high velocity and high temperature in order for a thermal cracking reaction to occur in said tube; means for agitating said hydrocarbon material which passes through said passage to distribute said gaseous material across an entire transverse cross section of said passage, said agitating means being in a protruded form and located on the inner surface of the tube wall in a direction intersecting a longitudinal axis of the tube to mix said gaseous materials flowing along said passage into a substantially uniform mixture to create a generally uniform temperature profile across an entire transverse cross section of said passage; and said agitating means being formed in a plurality of regions arranged from an inlet end of the tube to an outlet and thereof axially if the tube, said agitating means having a suitable pitch and suitable spacing between adjacent regions. The agitating means are in the forms of fins formed by helical projections extending helically on the tube wall inner surface axially of the tube and are each in the form of an annular projection circumferentially extending on the tube wall inner surface around the axis of the tube.

US 2002/0007941 discloses a heat exchanger tube having at least one twisted baffle therein, each of said twisted baffles extends inside the heat exchanger tube along the axis thereof, wherein said twisted baffles extend as long as at least part of the entire length of said heat exchanger tube and said twisted baffles are integrated with the inner surface of said heat exchanger tube.

All the above approaches aim at increasing the efficiency of the heat transfer by trying to impose a spin to the hydrocarbon stream. However, in all cases the suggested solutions show only limited success and/or are not applicable for existing coils, making a recoiling necessary which is not only expensive but also results in downtime of the furnace and reactor, respectively.

### SUMMARY OF THE DISCLOSURE

Accordingly, there is still a need for a simple means of controlling the flow of a gaseous hydrocarbon stream in cracking processes to achieve a homogeneous temperature distribution which can be implemented into existing cracking coils.

Surprisingly it has been found that the flow profile of a gaseous hydrocarbon stream can be manipulated and formed by providing a modular agitation means to an existing coil. The modular means can be implemented in existing coils during regular maintenance activity so the necessity for expensive recoiling does not occur. The modular agitation means of the present disclosure comprises a tubular component which can be affixed to a cracking coil or tube and an insert which is arranged in the tubular component and configured to direct the hydrocarbon stream to not only cause a spin in the hydrocarbon stream but also a mixing thereby allowing rearrangement of the molecule distribution in the stream as well as modification of the flow profile.

In general, the present disclosure provides a modular agitation means for agitating a gaseous stream of hydrocarbon material in a thermal cracking process, the agitation means comprising:
a) a tubular component defining a flow passage for a gaseous stream of hydrocarbon material, the tubular component being configured to be attached to a cracking coil; and
b) at least one insert arranged in the flow passage defined by the tubular component,
wherein the at least one insert is configured to agitate said gaseous stream of hydrocarbon material flowing along said flow passage by creating different pressure environments in the tubular component.

In some embodiments, the insert is configured to create a helical flow profile in the gaseous stream of hydrocarbon material.

In some embodiments, the insert has an axial part and at least one protrusion projecting from said axial part, the at least one protrusion preferably having a pitch.

In some embodiments, the insert comprises multiple protrusions radially arranged around the axial part.

In some embodiments, the multiple protrusions form a helical spiral around the axial part.

In some embodiments, the agitation means comprises more than one insert, preferably arranged asymmetrically in an offset manner in the tubular component.

In some embodiments, the at least one insert is fixed within the tubular component.

In some embodiments, the at least one protrusion is equipped with a flow-optimized edge.

In some embodiments, the thickness of the protrusion decreases from the leading edge to the trailing edge.

In some embodiments, the tubular component and the at least one insert form an integral piece.

In some embodiments, the tubular component and/or the at least one insert is made of a heat resistant alloy, preferably selected from nickel-chrome alloys and alumina forming alloys, the nickel-chrome alloys preferably further comprising at least one of silicon, niobium and titanium.

In a further aspect, the present disclosure refers to an insert for agitating a gaseous stream of hydrocarbon material in a cracking process, the insert being configured to be inserted into the flow passage defined by a cracking coil, characterized in that the insert is configured to agitate a gaseous stream of hydrocarbon material flowing along said flow passage by creating different pressure environments in the tubular component.

In some embodiments, the insert comprises means for affixing the insert to an inner surface of a cracking coil or tube, preferably at the inlet section of the cracking coil or tube.

In a further aspect, the present disclosure refers to a cracking coil for thermal cracking processes, the cracking coil comprising an inlet section for receiving a gaseous stream of hydrocarbon material and at least one modular agitation means of the present disclosure or at least one insert of the present disclosure.

In some embodiments, the at least one modular agitation means is arranged at the inlet section of the cracking coil.

In a further aspect, the present disclosure refers to a tube of a cracking coil for thermal cracking processes, the tube comprising an inlet section for receiving a gaseous stream of hydrocarbon material and at least one modular agitation means of the present disclosure or at least one insert of the present disclosure.

In some embodiments, the at least one modular agitation means is arranged at the inlet section of the tube.

In a further aspect, the present disclosure refers to a process for the thermal cracking of hydrocarbons, characterized in that a gaseous stream of hydrocarbon material is passed through a cracking coil of the present disclosure.

In some embodiments, the process is a process for producing either one of ethylene, propylene, butylene or hydrogen.

In a further aspect, the present disclosure refers to the use of an insert of the present disclosure or a cracking coil or tube of the present disclosure in industrial plants, preferably thermal crackers or steam reformers.

### BRIEF DESCRIPTION OF THE FIGURES

The following figures illustrate exemplary favorable embodiments of the subject-matter disclosed herein. The claimed subject-matter may be understood by reference to the following description taken in conjunction with the accompanying figures, in which like reference numerals identify like elements, and in which
Figure 1 shows the flow profile of a gaseous hydrocarbon stream in a conventional cracking coil together with the resulting temperature profile across a transverse cross-section of said stream;
Figure 2 shows the flow profile of a gaseous hydrocarbon stream achieved in a cracking coil equipped with a modular agitation means of the present disclosure together with the resulting temperature profile across a transverse cross-section of the hydrocarbon stream;
Figure 3 shows an assembly of exemplary cracking coils equipped with a modular agitation means of the present disclosure.

### DETAILED DESCRIPTION

As mentioned above, one aspect of the present disclosure is a modular agitation means for agitating a gaseous stream of hydrocarbon material in a thermal cracking process, the agitation means comprising a) a tubular component defining a flow passage for a gaseous stream of hydrocarbon material, the tubular means being configured to be attached to a cracking coil; and b) at least one insert which is arranged in the flow passage defined by the tubular component. The at least one insert is configured to agitate the gaseous stream of hydrocarbon material passing through the tubular component. Agitation is achieved by creating different pressure environments in the tubular component. It was surprisingly found that by creating different pressure environments, not only the flow profile of the gaseous stream is modified but also the molecular distribution within the gaseous stream is rearranged, resulting in a homogenous temperature profile across a transverse cross section of the gaseous stream and efficient heat transfer.

While most of the common approaches of increasing the efficiency of heat transfer in thermal cracking processes require replacement of the existing cracking coils, the present disclosure provides a modular agitation means which can be implemented into existing plants. The modular agitation means of the present disclosure is equipped to be implemented in a cracking coil or tube of a cracking coil, respectively. One or more of the modular agitation means of the present disclosure can be implemented anywhere into the cracking coil. However, an embodiment is preferred wherein the modular agitation means of the present disclosure is attached to the inlet part of at least one of the tubes of the cracking coil so that a gaseous stream of hydrocarbon material passes through the modular agitation means of the present disclosure before entering the tube and cracking coil, respectively. By placing the modular agitation means of the present disclosure in front of the inlet of the at least one tube of the cracking coil, it was surprisingly found that the gaseous stream of hydrocarbons maintains the homogenous flow and temperature profile, which is generated when the gaseous stream of hydrocarbons passes through the modular agitation means of the present disclosure, when entering the cracking coil.

Attachment of the modular agitation means of the present disclosure to the cracking coil, respectively tube, may be affected by any known method to the person skilled in the art, such as welding.

The modular agitation means of the present disclosure addresses the problem of efficient heat transfer in gaseous reactions. In this regard, the modular agitation means of the present disclosure is configured to agitate a gaseous stream of hydrocarbon material. The hydrocarbon material is in particular a cracking feedstock such as Naphtha, LPG and ethane. Further, the hydrocarbon material may include pyrolysis oil or may stem from renewable stocks. The gaseous stream of hydrocarbon material may further comprise other components such as steam or hydrogen.

Common approaches of manipulating the flow profile of a gaseous stream of hydrocarbon material include the use of coils with structured inner surfaces. The idea is to provide the gaseous stream of hydrocarbons with a "spin", getting the gaseous stream to rotate to basically create a helical flow of the gaseous stream. However, analyses of such streams show that the gaseous stream still shows an inhomogeneous temperature profile with higher temperatures in the middle of the stream. The present disclosure picks up on that idea and takes it one step further by providing a modular agitation means which is configured to not only create a gaseous stream of hydrocarbons with a helical flow profile but also achieving additional mixing within the stream, i.e. a rearrangement of the molecule distribution within the stream. In this regard, the modular agitation means of the present disclosure is equipped with a tubular component configured for receiving the gaseous stream of hydrocarbon material and providing a flow passage for said stream. Within said tubular component an insert is arranged to agitate a gaseous stream of hydrocarbon material passing through the modular agitation means of the present disclosure. In a preferred embodiment, the insert is designed to have an axial part and at least one protrusion projecting outward from the axial part. Preferably, the axial part of the insert is arranged in the middle of the tubular component of the agitation means of the present disclosure, with the at least one protrusion extending from the axial part. In a further preferred embodiment, the at least one protrusion is in the form of a fin or a blade, the fin or blade preferably having a pitch. In a preferred embodiment, the pitch is less than 45°, more preferably 15 to 30°, in particular less than 15°, such as 1 to 10°. By arranging the protrusion to have a pitch, the pressure loss can be further minimized. The optimum pitch may, for example, be determined with the help of computational fluid dynamics (CFD).

In order to achieve complete intermixing of the gaseous stream of hydrocarbon material, embodiments of the present disclosure are preferred wherein the insert is equipped with multiple protrusions which are arranged radially around its axial part. The multiple protrusions are preferably arranged in an evenly spaced manner around the axial part of the insert. In a particularly preferred embodiment, the multiple protrusions form a helical spiral around the axial part of the insert.

The number of protrusions projecting outward from the axial part of the insert can be adapted according to need. However, for optimal temperature distribution within the gaseous stream of hydrocarbon material, a number of two to four protrusions have been found beneficial. Therefore, in a preferred embodiment, the insert of the modular means of agitation of the present disclosure is equipped with two to four protrusions, preferably in the form of fins or blades, which are arranged radially around the axial part of the insert in an evenly spaced manner. In a further preferred embodiment, the insert is equipped with multiple sets of protrusions, each set preferably comprising two to four protrusions and the sets of protrusions preferably being arranged in a subsequent and staggered manner.

The modular agitation means of the present disclosure may comprise more than one insert. In that case, the inserts are preferably arranged asymmetrically in an offset manner within the tubular component of the modular agitation means. In case the modular agitation means comprises more than one insert, the inserts are preferably connected by way of connecting the axial parts of the individual inserts.

The modular agitation means of the present disclosure is equipped with an insert for manipulating the flow behavior of a gaseous stream of hydrocarbon material. For achieving said means, the insert has at least one protrusion. The protrusion is also designed for optimal flow control. To this end, the at least one protrusion is preferably equipped with a leading edge and a trailing edge. The leading edge is preferably flow optimized. The form of the flow-optimized edge may, for example, be calculated by computational fluid dynamics (CFD). The flow-optimized leading edge may, for example be rounded or tapered. In the same spirit, the at least one protrusion preferably also has a flow-optimized trailing edge. In an especially preferred embodiment, the flow optimized trailing edge is realized in that the thickness of the protrusion decreases from the leading edge to the trailing edge across the protrusion.

In a particular preferred embodiment, the insert may be in the shape of a propeller. Despite being in the shape of a propeller, the insert is designed to be a static element within the modular agitation means. Therefore, in a preferred embodiment, the insert, especially when in the shape of a propeller, may be attached to the inside of the tubular component of the modular agitation means of the present disclosure by means of the outer edges of the blades of the propeller-shaped insert.

The insert present in the modular agitation means of the present disclosure is preferably fixed within the tubular component in an immobile manner. Fixation of the insert in the tubular component may, for example, be effected by attaching the at least one protrusion to an inner wall of the tubular component. In this regard, the at least one insert and the tubular component are connected to one another with positive fit.

The modular agitation means of the present disclosure is intended to be used in an aggressive environment with high temperatures and low pressures and constantly comes into contact with a fast-flowing gaseous stream of hydrocarbon material. In such an environment any attachment points between different components, e.g., a welding seam, poses a potential risk of increased coking and thus failure. Therefore, in order to avoid any such risks, an embodiment of the modular agitation means of the present disclosure is preferred wherein the tubular component and the at least one insert form an integral piece.

Due to the harsh conditions the modular agitation means of the present disclosure is exposed to, the tubular component and/or the at least one insert are preferably made of a heat resistant material, preferably a heat resistant alloy, e.g., heat resistant alloys as used for cracking coils. Such materials are known to the person skilled in the art. In a particular preferred embodiment, the tubular component and/or the at least one insert are made of a heat resistant alloy selected from the group consisting of nickel-chrome alloys and alumina forming alloys, the nickel-chrome alloys preferably further comprising at least one of silicon, niobium and titanium. Suitable nickel-chrome alloys are, for example, 1.4852 GX40NiCrSiNb35-25, 1.4859 GX10NiCrNbTi32-20 and 1.4889 GX45NiCrSiNb45-35. The material of the tubular component may be the same or different from that of the at least one insert. However, in light of compatibility, an embodiment is preferred wherein the tubular component and the at least one insert are made of or from the same material.

In order to improve flow properties, the inside of the tubular component as well as the insert may be provided with a modified surface. For example, the surface may be geometrically modified or equipped with an active coating to reduce coking. Such means are, for example, described in WO 2016/023776. In an alternatively preferred embodiment, the inner surface of the tubular component and/or the surface of the insert, especially the surface of the at least one protrusion, have a surface roughness Rₐ of less than 5 µm, preferably less than 4 µm, even more preferably between 2.7 µm and 2 µm, determined according to ASME B46.1.

The modular agitation means of the present disclosure is intended to be used in harsh environments of high temperatures. Furthermore, the modular agitation means, in particular the insert and the inner surface of the tubular component are constantly exposed to a gaseous stream of hydrocarbons. This gaseous stream may contain small particles which, due to their high velocity, put constant stress on the material. Therefore, in order to protect the material and prolong their lifetime, the surface of the insert and/or the inner surface of the tubular component may be provided with a coating. The coating is preferably made of a highly durable material such hard materials, preferably tungsten carbides. The material used for the coating preferably has a hardness of more than 610 HV, more preferably of 610 to 1300 HV, in particular of 610 to 920 HV and in particular 610 to 820 HV. In one embodiment, the coating may have a hardness of 610 to 820 HV. In a further preferred embodiment, the coating may have a hardness of 820 to 920 HV. In a particular preferred embodiment, the coating may have a hardness of 940 to 1300 HV. The hardness may be determined in accordance with DIN EN 1274.

The coating can, for example, be applied by thermal spraying. The thickness of the coating is preferably no more than 0.35 mm. In a preferred embodiment, the thickness of the coating is 0.15 to 0.35 mm, more preferably 0.15 to 0.3 mm, in particular 0.15 to 0.25 mm. In preferred embodiment, the coating may have a thickness of 0.3 to 0.35 mm. Particular preference is given to an embodiment, wherein the coating may have a thickness of 0.15 to 0.25 mm. In an alternatively preferred embodiment, the coating may have a thickness of less than 0.15 mm. The thickness of the coating may be determined by ultrasonic measurement.

The size of the modular agitation means of the present disclosure can be adapted to be fitting to the cracking tube. Concerning the length of the modular agitation means, favorable results regarding the temperature profile of the gaseous stream of hydrocarbon material were achieved when the modular agitation means had a length corresponding to about 10% of the subsequent cracking tube or coil. Therefore, preferably, the modular agitation means of the present disclosure has a length of 500 to 1200 mm.

Instead of, or in addition to, equipping a tube of a cracking coil with a modular agitation means of the present disclosure, the described insert may also be used separately, e.g., to be implanted into an existing tube assembly or cracking coil. Therefore, in another aspect, the present disclosure relates to an insert for agitating a gaseous stream of hydrocarbon material in a cracking process, the insert being configured to be inserted into the flow passage defined by a cracking coil, characterized in that the insert is configured to agitate a gaseous stream of hydrocarbon material flowing along said flow passage by creating different pressure environments in the tubular component. The insert is preferably one as described in conjunction with the modular agitation means of the present disclosure.

The insert may be inserted into the cracking coil, preferably at the inlet side of the cracking coil. This way, the flow and temperature profile of the gaseous stream of hydrocarbon material can be harmonized before entering the cracking coil. Cracking coils usually comprise a bundle of tubes as passage for the gaseous stream of hydrocarbons. The insert is therefore preferably installed in at least one of said tube. In order to conveniently install the insert in the tube, the insert is preferably equipped with means for affixing the insert to an inner wall of the tube. In particular, the insert is equipped to be affixed into an inlet section of at least tube of a cracking coil. In a preferred embodiment, an insert is present at the entry into the straight passage of at least one of the tubes of the cracking coil, preferably in each tube.

In a further aspect, the present disclosure refers to a cracking coil for thermal cracking processes. The cracking coil comprises an inlet section for receiving a gaseous stream of hydrocarbon material and at least one modular agitation means of the present disclosure or at least one insert of the present disclosure. The at least one modular means or the at least one insert are preferably arranged at the inlet section of the cracking coil. This way, a gaseous stream of hydrocarbon material with a homogenous flow and temperature profile can be introduced into the cracking coil, allowing for a more efficient heat transfer.

In a further aspect, the present disclosure refers to a tube of a cracking coil for thermal cracking processes, the tube comprising an inlet section for receiving a gaseous stream of hydrocarbon material and at least one modular agitation means of the present disclosure or at least one insert of the present disclosure.

In some embodiments, the at least one modular agitation means is arranged at the inlet section of the tube.

In a further aspect, the present disclosure refers to a process for cracking hydrocarbons. In the process, a gaseous stream of hydrocarbon material is passed through a cracking coil of the present disclosure, i.e., a cracking which either has a modular agitation means of the present disclosure or an insert of the present disclosure to create a homogenous flow of the hydrocarbon compounds and temperature profile in the gaseous stream of hydrocarbon material. Due to the harsh conditions applied in cracking processes, some of the hydrocarbon material is transformed into coke which tends to adhere to any surface which comes into contact with the gaseous stream of hydrocarbons. Accumulation of coke on the surface tends to additionally aggravate the formation of coke so that regular decoking becomes necessary. It was surprisingly found coking is significantly reduced in the process of the present disclosure thereby not only prolonging the lifetime of the cracking coil but also the runtime, i.e. the time between decoking. Apart from a prolonged lifetime and runtime of the coils due to reduced coking, the process of the present disclosure also allows the reduction of energy consumption by providing efficient heating of the gaseous stream of hydrocarbon material. In a preferred embodiment, the hydrocarbon material is a cracking feedstock comprising hydrocarbons selected from the group consisting of Naphtha, LPG and ethane. Further, the hydrocarbon material may include pyrolysisoil or may stem from renewable stocks. The gaseous stream of hydrocarbon material may comprise other gaseous components such as steam.

In a preferred embodiment, the process of the present disclosure is a process for producing either one of ethylene, propylene, butylene or hydrogen.

In a further aspect, the present disclosure refers to the use of an insert of the present disclosure or a cracking coil, or tube respectively, of the present disclosure or a modular agitation means of the present disclosure in an industrial plant, preferably in a thermal cracker or steam reformer.

The present disclosure will be explained in more detail with references to the following figures which by no means are to be understood as limiting the scope and spirit of the disclosure.

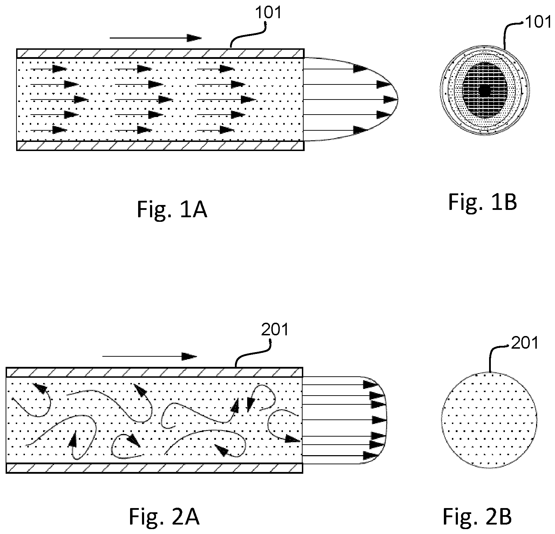

Figure 1A depicts schematically the flow profile of a gaseous stream of hydrocarbon material in a conventional cracker coil 101 and Figure 1B shows the resulting temperature profile in a transverse cross-section across the stream. As can be seen, due to the different flow velocities, with the velocity in the middle of the stream being higher than at the edge closer to the wall of the cracker coil, the stream shows an inhomogeneous temperature profile, i.e. the heat is not uniformly distributed.

Figure 2A depicts schematically the flow profile of a gaseous stream of hydrocarbon material in a cracker coil of the present disclosure 201 which has been agitated with a modular agitation means of the present disclosure before entering the coil and Figure 2B shows the resulting temperature profile in a transverse cross-section across the stream. As can be seen, due to the unique agitation of the gaseous stream of hydrocarbon material, the stream moves with a uniform velocity, resulting in an even heat distribution across a traverse cross section of the stream. The uniform temperature distribution results in less overheating of the material and less coking and fouling of the cracker coil, resulting in longer periods between decoking. Thus, efficient use of energy is accompanied by reduced down time of the reactor.

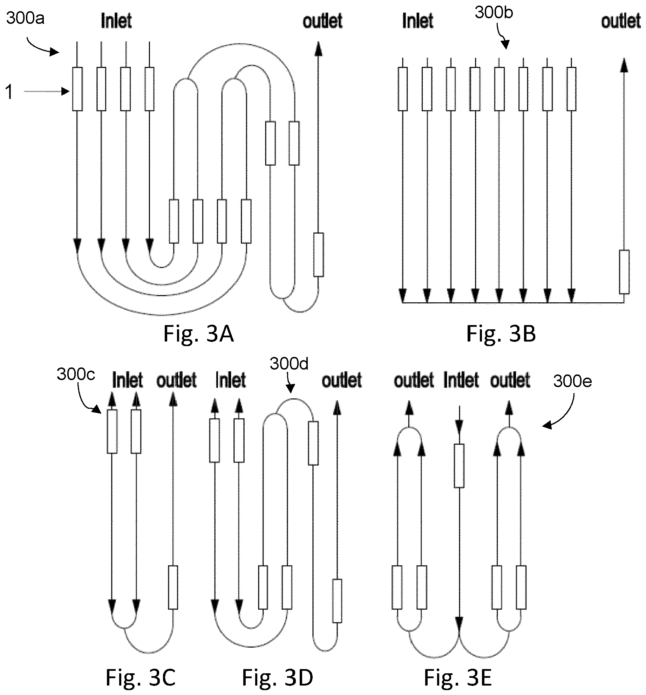

Figures 3A to 3E show exemplary cracking coil assemblies 300a, 300b, 300c, 300d, 300e comprising modular means of agitation 1 of the present disclosure. The cracking coil assemblies comprise multiple means of agitation of the present disclosure, preferably located at the inlet part of the tube. The gaseous stream of hydrocarbon material is agitated by the agitation means of the present disclosure. The favorable flow and temperature profile achieved is maintained throughout the tube and reestablished before the gaseous stream enters the next section.

## Claims

1. Modular agitation means for agitating a gaseous stream of hydrocarbon material in a thermal cracking process, the agitation means comprising:
a) a tubular component defining a flow passage for a gaseous stream of hydrocarbon material, the tubular component being configured to be attached to a cracking coil; and
b) at least one insert arranged in the flow passage defined by the tubular component,
wherein the at least one insert is configured to agitate said gaseous stream of hydrocarbon material flowing along said flow passage by creating different pressure environments in the tubular component.

2. Agitation means according to claim 1, **characterized in that** the insert has an axial part and at least one protrusion projecting from said axial part, the at least one protrusion preferably having a pitch.

3. Agitation means according to claim 1 or 2, **characterized in that** the insert comprises multiple protrusions radially arranged around the axial part.

4. Agitation means according to claim 3, **characterized in that** the multiple protrusions form a helical spiral around the axial part.

5. Agitation means according to any one of the forgoing claims, **characterized in that** the agitation means comprises more than one insert, preferably arranged asymmetrically in an offset manner in the tubular component.

6. Agitation means according to any one of the forgoing claims, **characterized in that** the at least one insert is fixed within the tubular component.

7. Agitation means according to any of claims 2 to 6, **characterized in that** the at least one protrusion is equipped with a flow-optimized leading edge.

8. Agitation means according to any one of claims 2 to 7, **characterized in that** thickness of the protrusion decreases from the leading edge to the trailing edge.

9. Agitation means according to any one of the forgoing claims, **characterized in that** the tubular component and the at least one insert form an integral piece.

10. Insert for agitating a gaseous stream of hydrocarbon material in a cracking process, the insert being configured to be inserted into the flow passage defined by a cracking coil, **characterized in that** the insert is configured to agitate a gaseous stream of hydrocarbon material flowing along said flow passage by creating different pressure environments in the tubular component.

11. Insert according to claim 10, **characterized in that** the insert comprises means for affixing the insert to an inner surface of a cracking coil, preferably at the inlet section of a cracking coil.

12. Cracking coil for thermal cracking processes, the cracking coil comprising an inlet section for receiving a gaseous stream of hydrocarbon material, **characterized in that** the cracking coil comprises at least one modular agitation means according to any of claims 1 to 9 or at least one insert according to any of claims 10 or 11.

13. Tube of a cracking coil for thermal cracking processes, the tube comprising an inlet section for receiving a gaseous stream of hydrocarbon material and at least one modular agitation means according to at least one of claims 1 to 9 or an insert according to at least one of claims 10 or 11.

14. Process for the thermal cracking of hydrocarbons, **characterized in that** a gaseous stream of hydrocarbon material is passed through a cracking coil according to any of claims 12 or 13.

15. Use of an insert according to any one of claims 10 or 11 or a cracking coil according to any of claims 12 or a tube according to claim 13 in industrial plants, preferably thermal crackers or steam reformers.
